# EUROPEAN PATENT APPLICATION

(11) **EP 4 734 315 A1**
(43) Date of publication of application: **29.04.2026**
(21) Application number: 25211552.2
(22) Date of filing: 28.10.2025
(51) Int. Cl.: H02J 3/001, H02J 3/38, H02J 3/388

(54) **PHOTOVOLTAIC POWER GENERATION SYSTEM AND CONTROL METHOD THEREOF**

(30) Priority: 28.10.2024 CN 202411518300
(71) Applicant: Huawei Digital Power Technologies Co., Ltd., Shenzhen, Guangdong 518043 (CN)
(72) Inventor: LUO, Wei, Shenzhen, 518043 (CN); HU, Tianqi, Shenzhen, 518043 (CN); SHI, Hui, Shenzhen, 518043 (CN); FU, Jiangtao, Shenzhen, 518043 (CN); HUI, Libin, Shenzhen, 518043 (CN); YE, Yong, Shenzhen, 518043 (CN); CHANG, Guozhu, Shenzhen, 518043 (CN)
(74) Representative: Isarpatent

(57) **Abstract**

Embodiments of this application disclose a photovoltaic power generation system and a control method of the photovoltaic power generation system, to resolve a problem about how to ensure safety of the photovoltaic power generation system when the photovoltaic power generation system starts in an off-grid manner upon a power outage of a power grid while an on-grid/off-grid switching apparatus has a simple structure, low costs, and high reliability. The controller is configured to: when a power outage occurs in the power grid and an output voltage of a photovoltaic inverter is controlled to be less than or equal to a first voltage threshold, control a first switch to be turned on and control a second switch to be turned off, where the first voltage threshold is greater than zero and less than or equal to a human body safety voltage threshold. The controller is further configured to: after controlling the first switch to be turned on, detect a voltage difference between two ends of the second switch; and when the voltage difference between the two ends of the second switch is greater than a second voltage threshold and less than or equal to a voltage value of the output voltage of the photovoltaic inverter, control the output voltage of the photovoltaic inverter to rise to being greater than or equal to a third voltage threshold, so that the photovoltaic inverter supplies power to a load.

## Description

### TECHNICAL FIELD

This application relates to the field of energy technologies, and in particular, to a photovoltaic power generation system and a control method of the photovoltaic power generation system.

### BACKGROUND

A photovoltaic power generation system includes a photovoltaic inverter and an on-grid/off-grid switching apparatus. The on-grid/off-grid switching apparatus may also be referred to as a whole-house backup power box. An input end of the photovoltaic inverter is configured to connect to an output end of a photovoltaic array, and an output end of the photovoltaic inverter is connected to an input end of the on-grid/off-grid switching apparatus. A first output end of the on-grid/off-grid switching apparatus is configured to connect to a load, and a second output end of the on-grid/off-grid switching apparatus is configured to connect to a power grid.

Specifically, two switches connected in series are disposed between the first output end and the second output end of the on-grid/off-grid switching apparatus, and the two switches are separately controlled through two drive circuits. In this way, when the photovoltaic power generation system starts in an off-grid manner upon a power outage of the power grid and either of the two switches is faulty, the other switch may ensure that the on-grid/off-grid switching apparatus is disconnected from the power grid, to isolate the photovoltaic power generation system from the power grid. Therefore, there is no safety compliance risk, and safety of the photovoltaic power generation system may be ensured.

However, the two switches connected in series are disposed between the first output end and the second output end of the on-grid/off-grid switching apparatus, and the two switches are separately controlled through two drive circuits. As a result, the on-grid/off-grid switching apparatus has a complex structure, high costs, and low reliability. Therefore, a problem to be urgently resolved is about how to disconnect the on-grid/off-grid switching apparatus from the power grid when the photovoltaic power generation system starts in an off-grid manner upon a power outage of the power grid, to isolate the photovoltaic power generation system from the power grid, satisfy a safety compliance risk requirement and ensure safety of the photovoltaic power generation system while the on-grid/off-grid switching apparatus has a simple structure, low costs, and high reliability.

### SUMMARY

Embodiments of this application provide a photovoltaic power generation system and a control method of the photovoltaic power generation system, to resolve a problem about how to disconnect an on-grid/off-grid switching apparatus from a power grid when the photovoltaic power generation system starts in an off-grid manner upon a power outage of the power grid, to isolate the photovoltaic power generation system from the power grid, satisfy a safety compliance risk requirement and ensure safety of the photovoltaic power generation system while the on-grid/off-grid switching apparatus has a simple structure, low costs, and high reliability.

To achieve the foregoing objectives, the following technical solutions are used in embodiments of this application.

According to a first aspect of embodiments of this application, a photovoltaic power generation system is provided. The photovoltaic power generation system includes a photovoltaic inverter and an on-grid/off-grid switching apparatus. An input end of the photovoltaic inverter is configured to connect to a photovoltaic array, and an output end of the photovoltaic inverter is connected to an input end of the on-grid/off-grid switching apparatus. The photovoltaic inverter includes a controller, and the on-grid/off-grid switching apparatus includes a first switch and a second switch. One end of the first switch is connected to the input end of the on-grid/off-grid switching apparatus, the other end of the first switch is connected to one end of the second switch, the other end of the first switch is further configured to connect to a load, and the other end of the second switch is configured to connect to a power grid. The controller is configured to: when a power outage occurs in the power grid and an output voltage of the photovoltaic inverter is controlled to be less than or equal to a first voltage threshold, control the first switch to be turned on and control the second switch to be turned off, where the first voltage threshold is greater than zero and less than or equal to a human body safety voltage threshold. The controller is further configured to: after controlling the first switch to be turned on, detect a voltage difference between the two ends of the second switch; and when the voltage difference between the two ends of the second switch is greater than a second voltage threshold and less than or equal to a voltage value of the output voltage of the photovoltaic inverter, control the output voltage of the photovoltaic inverter to rise to being greater than or equal to a third voltage threshold, so that the photovoltaic inverter supplies power to the load. The second voltage threshold is greater than zero and less than the first voltage threshold, and the third voltage threshold is greater than the human body safety voltage threshold.

Based on this solution, when a power outage occurs in the power grid and the output voltage of the photovoltaic inverter is controlled to be less than or equal to the first voltage threshold, the controller controls the first switch to be turned on and controls the second switch to be turned off. An alternating current transmitted by the first switch to the second switch is used to perform stuck-at fault detection on the second switch, thereby improving accuracy of fault detection on the second switch. In addition, because the output voltage of the photovoltaic inverter is less than or equal to the first voltage threshold and the first voltage threshold is greater than zero and less than or equal to the human body safety voltage threshold, when the second switch has a stuck-at fault, a voltage of an alternating current output by the second switch to the power grid is also less than or equal to the human body safety voltage threshold without causing injury to power grid maintenance personnel, thereby satisfying a safety compliance risk requirement and ensuring safety of the photovoltaic power generation system. Furthermore, in a conventional technology, when a photovoltaic power generation system starts, an on-grid/off-grid switching apparatus is disconnected from a power grid by using two switches connected in series, to isolate the photovoltaic power generation system from the power grid, where the two switches are separately controlled through two drive circuits. In comparison, when the photovoltaic power generation system provided in this embodiment of this application starts in an off-grid manner, the on-grid/off-grid switching apparatus may be disconnected from the power grid by using one switch, namely, the second switch, to isolate the photovoltaic power generation system from the power grid. The second switch does not need to be controlled through two drive circuits. The on-grid/off-grid switching apparatus has a simple structure, low costs, and high reliability. Finally, when the voltage difference between the two ends of the second switch is greater than the second voltage threshold and less than or equal to the voltage value of the output voltage of the photovoltaic inverter and it is determined that the second switch has no stuck-at fault, the controller controls the output voltage of the photovoltaic inverter to rise to being greater than or equal to the third voltage threshold, so that the photovoltaic inverter supplies power to the load. A solution of detecting whether the second switch is stuck is simpler, and it may be ensured that the photovoltaic inverter does not transmit a relatively high voltage through the second switch to the power grid, thereby ensuring safety of the photovoltaic power generation system.

With reference to the first aspect, in a possible implementation, the controller is further configured to: after controlling the first switch to be turned on, detect the voltage difference between the two ends of the second switch; and when the voltage difference between the two ends of the second switch is greater than or equal to zero and less than or equal to a fourth voltage threshold, control the first switch to be turned off, and control the photovoltaic inverter to shut down. The fourth voltage threshold is greater than zero and less than or equal to the second voltage threshold.

Based on this solution, when the voltage difference between the two ends of the second switch is greater than or equal to zero and less than or equal to the fourth voltage threshold and it is determined that the second switch has a stuck-at fault, the controller controls the first switch to be turned off and controls the photovoltaic inverter to shut down. A solution of detecting whether the second switch is stuck is simpler, and it may be ensured that the photovoltaic inverter does not transmit a relatively high voltage through the second switch to the power grid, thereby ensuring safety of the photovoltaic power generation system.

With reference to the first aspect, in a possible implementation, the on-grid/off-grid switching apparatus further includes a rectifier circuit and an energy storage apparatus. An input end of the rectifier circuit is connected to the input end of the on-grid/off-grid switching apparatus, an output end of the rectifier circuit is connected to an input end of the energy storage apparatus, and the energy storage apparatus is configured to supply power to the on-grid/off-grid switching apparatus. The controller is further configured to: before controlling the output voltage of the photovoltaic inverter to be less than or equal to the first voltage threshold, control the output voltage of the photovoltaic inverter to rise from zero to being greater than or equal to the third voltage threshold, to charge the energy storage apparatus. The controller is further configured to: after controlling the photovoltaic inverter to charge the energy storage apparatus, when a voltage of the energy storage apparatus is greater than or equal to a fifth voltage threshold and voltage fluctuation of the energy storage apparatus is less than or equal to a voltage fluctuation threshold, control the output voltage of the photovoltaic inverter to decrease to being less than or equal to the first voltage threshold.

Based on this solution, the controller first controls the photovoltaic inverter to charge the energy storage apparatus; and when the voltage of the energy storage apparatus is greater than or equal to the fifth voltage threshold, the voltage fluctuation of the energy storage apparatus is less than or equal to the voltage fluctuation threshold, and charging of the energy storage apparatus is complete, controls the output voltage of the photovoltaic inverter to decrease to being less than or equal to the first voltage threshold. The energy storage apparatus is configured to supply power to the on-grid/off-grid switching apparatus, to avoid a case in which the on-grid/off-grid switching apparatus cannot operate normally when the output voltage of the photovoltaic inverter is less than the third voltage threshold, thereby improving reliability of the on-grid/off-grid switching apparatus and reliability of the photovoltaic power generation system.

With reference to the first aspect, in a possible implementation, the energy storage apparatus is configured to supply power to the on-grid/off-grid switching apparatus from a first moment to a second moment. The first moment is a moment at which the voltage of the energy storage apparatus is greater than or equal to the fifth voltage threshold and the voltage fluctuation of the energy storage apparatus is less than or equal to the voltage fluctuation threshold. The second moment is a moment at which the output voltage of the photovoltaic inverter rises from being less than or equal to the first voltage threshold to being greater than or equal to the third voltage threshold.

Based on this solution, the energy storage apparatus is configured to supply power to the on-grid/off-grid switching apparatus from the first moment to the second moment. The first moment is a moment at which the voltage of the energy storage apparatus is greater than or equal to the fifth voltage threshold and the voltage fluctuation of the energy storage apparatus is less than or equal to the voltage fluctuation threshold. The second moment is a moment at which the output voltage of the photovoltaic inverter rises from being less than or equal to the first voltage threshold to being greater than or equal to the third voltage threshold, to avoid a case in which the on-grid/off-grid switching apparatus cannot operate normally when the output voltage of the photovoltaic inverter is less than the third voltage threshold, thereby improving reliability of the on-grid/off-grid switching apparatus and reliability of the photovoltaic power generation system.

With reference to the first aspect, in a possible implementation, the energy storage apparatus includes a capacitor or a lithium battery.

According to a second aspect of embodiments of this application, a photovoltaic power generation system control method is provided, and applicable to a photovoltaic power generation system. The method includes: When a power outage occurs in a power grid and an output voltage of a photovoltaic inverter is controlled to be less than or equal to a first voltage threshold, a controller controls a first switch to be turned on and controls a second switch to be turned off, where the first voltage threshold is greater than zero and less than or equal to a human body safety voltage threshold. After controlling the first switch to be turned on, the controller detects a voltage difference between two ends of the second switch; and when the voltage difference between the two ends of the second switch is greater than a second voltage threshold and less than or equal to a voltage value of the output voltage of the photovoltaic inverter, controls the output voltage of the photovoltaic inverter to rise to being greater than or equal to a third voltage threshold, so that the photovoltaic inverter supplies power to a load. The second voltage threshold is greater than zero and less than the first voltage threshold, and the third voltage threshold is greater than the human body safety voltage threshold. The photovoltaic power generation system includes the photovoltaic inverter and an on-grid/off-grid switching apparatus, an input end of the photovoltaic inverter is configured to connect to a photovoltaic array, and an output end of the photovoltaic inverter is connected to an input end of the on-grid/off-grid switching apparatus. The photovoltaic inverter includes the controller, and the on-grid/off-grid switching apparatus includes the first switch and the second switch. One end of the first switch is connected to the input end of the on-grid/off-grid switching apparatus, and the other end of the first switch is connected to one end of the second switch. The other end of the first switch is further configured to connect to the load. The other end of the second switch is configured to connect to the power grid.

With reference to the second aspect, in a possible implementation, the method further includes: After controlling the first switch to be turned on, the controller detects the voltage difference between the two ends of the second switch; and when the voltage difference between the two ends of the second switch is greater than or equal to zero and less than or equal to a fourth voltage threshold, controls the first switch to be turned off, and controls the photovoltaic inverter to shut down. The fourth voltage threshold is greater than zero and less than or equal to the second voltage threshold.

With reference to the second aspect, in a possible implementation, the method further includes: Before controlling the output voltage of the photovoltaic inverter to be less than or equal to the first voltage threshold, the controller controls the output voltage of the photovoltaic inverter to rise from zero to being greater than or equal to the third voltage threshold, to charge an energy storage apparatus. After controlling the photovoltaic inverter to charge the energy storage apparatus, when a voltage of the energy storage apparatus is greater than or equal to a fifth voltage threshold and voltage fluctuation of the energy storage apparatus is less than or equal to a voltage fluctuation threshold, the controller controls the output voltage of the photovoltaic inverter to decrease to being less than or equal to the first voltage threshold. The on-grid/off-grid switching apparatus further includes a rectifier circuit and the energy storage apparatus. An input end of the rectifier circuit is connected to the input end of the on-grid/off-grid switching apparatus, an output end of the rectifier circuit is connected to an input end of the energy storage apparatus, and the energy storage apparatus is configured to supply power to the on-grid/off-grid switching apparatus.

With reference to the second aspect, in a possible implementation, the energy storage apparatus is configured to supply power to the on-grid/off-grid switching apparatus from a first moment to a second moment. The first moment is a moment at which a voltage of the energy storage apparatus is greater than or equal to the fifth voltage threshold and the voltage fluctuation of the energy storage apparatus is less than or equal to the voltage fluctuation threshold. The second moment is a moment at which the output voltage of the photovoltaic inverter rises from being less than or equal to the first voltage threshold to being greater than or equal to the third voltage threshold.

With reference to the second aspect, in a possible implementation, the energy storage apparatus includes a capacitor or a lithium battery.

According to a third aspect of embodiments of this application, a photovoltaic inverter is provided. The photovoltaic inverter includes a controller, an inverter circuit, a first switch, and a second switch. An input end of the inverter circuit is configured to connect to a photovoltaic array, and an output end of the inverter circuit is connected to one end of the first switch. The other end of the first switch is connected to one end of the second switch. The other end of the first switch is further configured to connect to a load. The other end of the second switch is configured to connect to a power grid. The controller is configured to: when a power outage occurs in the power grid and an output voltage of the inverter circuit is controlled to be less than or equal to a first voltage threshold, control the first switch to be turned on and control the second switch to be turned off, where the first voltage threshold is greater than zero and less than or equal to a human body safety voltage threshold. The controller is further configured to: after controlling the first switch to be turned on, detect a voltage difference between the two ends of the second switch; and when the voltage difference between the two ends of the second switch is greater than a second voltage threshold and less than or equal to a voltage value of the output voltage of the inverter circuit, control the output voltage of the inverter circuit to rise to a value greater than or being equal to a third voltage threshold, so that the photovoltaic inverter supplies power to the load. The second voltage threshold is greater than zero and less than the first voltage threshold, and the third voltage threshold is greater than the human body safety voltage threshold.

With reference to the third aspect, in a possible implementation, the controller is further configured to: after controlling the first switch to be turned on, detect the voltage difference between the two ends of the second switch; and when the voltage difference between the two ends of the second switch is greater than or equal to zero and less than or equal to a fourth voltage threshold, control the first switch to be turned off, and control the photovoltaic inverter to shut down. The fourth voltage threshold is greater than zero and less than or equal to the second voltage threshold.

With reference to the third aspect, in a possible implementation, the photovoltaic inverter further includes a rectifier circuit and an energy storage apparatus. An input end of the rectifier circuit is connected to the output end of the inverter circuit, an output end of the rectifier circuit is connected to an input end of the energy storage apparatus, and the energy storage apparatus is configured to supply power to the photovoltaic inverter. The controller is further configured to: before controlling the output voltage of the inverter circuit to be less than or equal to the first voltage threshold, control the output voltage of the inverter circuit to rise from zero to being greater than or equal to the third voltage threshold, to charge the energy storage apparatus. The controller is further configured to: after controlling the inverter circuit to charge the energy storage apparatus, when a voltage of the energy storage apparatus is greater than or equal to a fifth voltage threshold and voltage fluctuation of the energy storage apparatus is less than or equal to a voltage fluctuation threshold, control the output voltage of the inverter circuit to decrease to being less than or equal to the first voltage threshold.

With reference to the third aspect, in a possible implementation, the energy storage apparatus is configured to supply power to the photovoltaic inverter from a first moment to a second moment. The first moment is a moment at which the voltage of the energy storage apparatus is greater than or equal to the fifth voltage threshold and the voltage fluctuation of the energy storage apparatus is less than or equal to the voltage fluctuation threshold. The second moment is a moment at which the output voltage of the inverter circuit rises from being less than or equal to the first voltage threshold to being greater than or equal to the third voltage threshold.

With reference to the third aspect, in a possible implementation, the energy storage apparatus includes a capacitor or a lithium battery.

For descriptions of the second aspect and the third aspect in this application, reference may be made to the detailed descriptions of the first aspect. In addition, for beneficial effects of the second aspect and the third aspect, reference may be made to the beneficial effect analysis of the first aspect. Details are not described herein.

### BRIEF DESCRIPTION OF DRAWINGS

FIG. 1 is a schematic of a circuit topology of a photovoltaic power generation system;
FIG. 2 is a schematic of a circuit topology of a photovoltaic power generation system according to an embodiment of this application;
FIG. 3 is a curve diagram of an output voltage of a photovoltaic inverter according to an embodiment of this application;
FIG. 4 is a schematic of a circuit topology of another photovoltaic power generation system according to an embodiment of this application;
FIG. 5 is a schematic flowchart of a photovoltaic power generation system control method according to an embodiment of this application;
FIG. 6A and FIG. 6B are a schematic flowchart of another photovoltaic power generation system control method according to an embodiment of this application; and
FIG. 7 is a schematic of a circuit topology of a photovoltaic inverter according to an embodiment of this application.

### DESCRIPTION OF EMBODIMENTS

The making and use of embodiments are discussed in detail below. It should be appreciated, however, that many applicable inventive concepts provided in this application may be implemented in a plurality of specific environments. The discussed specific embodiments are merely used to describe specific manners to implement and use this specification and this technology, and do not limit the scope of this application.

Unless otherwise defined, all technical terms used herein have the same meaning as those commonly known to a person of ordinary skill in the art.

The circuits or other components may be described as or referred to as "configured to" perform one or more tasks. In this case, the term "configured to" is used for implying a structure by indicating that a circuit/component includes a structure (for example, a circuit system) that performs one or more tasks during operation. Therefore, even when a specified circuit/component is currently not operable (for example, not started), the circuit/component may also be referred to as being configured to perform the task. Circuits/components used in conjunction with the "configured to" phrase include hardware, for example, a circuit for performing an operation.

The following describes the technical solutions in embodiments of this application with reference to the accompanying drawings in embodiments of this application. In this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural. In addition, in embodiments of this application, terms such as "first" and "second" do not limit a quantity or an execution sequence.

In this application, the term "example", "for example", or the like is used to give an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

Before embodiments of this application are described, technical terms and background technologies in this application are first described.

Photovoltaic array: A photovoltaic array includes at least one photovoltaic module. When the photovoltaic array includes a plurality of photovoltaic modules, the plurality of photovoltaic modules may be connected in series, or may be connected in parallel, or some of the plurality of photovoltaic modules are connected in series and other photovoltaic modules are connected in parallel.

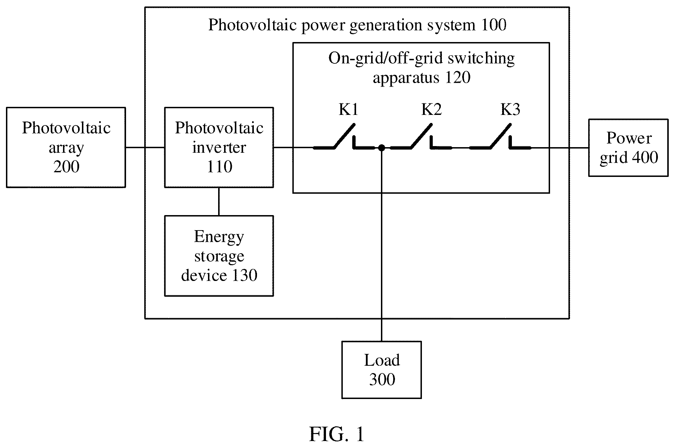

FIG. 1 is a schematic of a circuit topology of a photovoltaic power generation system 100. The photovoltaic power generation system 100 includes a photovoltaic inverter 110 and an on-grid/off-grid switching apparatus 120. An input end of the photovoltaic inverter 110 is configured to connect to an output end of a photovoltaic array 200, and an output end of the photovoltaic inverter 110 is connected to an input end of the on-grid/off-grid switching apparatus 120. A first output end of the on-grid/off-grid switching apparatus 120 is configured to connect to a load 300, and a second output end of the on-grid/off-grid switching apparatus 120 is configured to connect to a power grid 400. The first output end of the on-grid/off-grid switching apparatus 120 may be referred to as an off-grid port. The second output end of the on-grid/off-grid switching apparatus 120 may be referred to as an on-grid port.

Specifically, as shown in FIG. 1, the on-grid/off-grid switching apparatus 120 includes a first switch K1, a second switch K2, and a third switch K3. One end of the first switch K1 is connected to the input end of the on-grid/off-grid switching apparatus 120, and the other end of the first switch K1 is connected to the first output end of the on-grid/off-grid switching apparatus 120 and one end of the second switch K2. The other end of the second switch K2 is connected to one end of the third switch K3. The other end of the third switch K3 is connected to the second output end of the on-grid/off-grid switching apparatus 120.

The photovoltaic array 200 is configured to convert solar energy into a direct current, the photovoltaic inverter 110 is configured to convert the direct current into an alternating current, and the on-grid/off-grid switching apparatus 120 is configured to perform on-grid/off-grid switching. Refer to FIG. 1. When the photovoltaic power generation system 100 runs in an on-grid mode, the first switch K1, the second switch K2, and the third switch K3 in the on-grid/off-grid switching apparatus 120 are all turned on, and the on-grid/off-grid switching apparatus 120 is configured to transmit an alternating current to the power grid 400, or receive an alternating current from the power grid 400. Refer to FIG. 1. The photovoltaic power generation system 100 further includes an energy storage device 130 connected to the photovoltaic inverter 110. When a power outage occurs in the power grid 400, the photovoltaic inverter 110 is in a power-off state. For example, because there is no sunlight at night, when the energy storage device 130 has low power to supply power to the load 300 and consequently the photovoltaic inverter 110 is in the power-off state, the photovoltaic power generation system 100 needs to start in an off-grid manner. Specifically, the photovoltaic array 200 is configured to convert solar energy into a direct current in daytime, and the photovoltaic inverter 110 is configured to receive the direct current and start a self-check. After the self-check is complete, the photovoltaic inverter 110 starts to operate, to convert the direct current into an alternating current. The first switch K1 in the on-grid/off-grid switching apparatus 120 is turned on, and both the second switch K2 and the third switch K3 are in an open state, so that the alternating current is transmitted to the load 300, and the on-grid/off-grid switching apparatus 120 is disconnected from the power grid 400, thereby isolating the photovoltaic power generation system 100 from the power grid 400.

In the on-grid/off-grid switching apparatus 120, the second switch K2 and the third switch K3 are disposed, and the two switches are separately controlled through two drive circuits. In this way, when the photovoltaic power generation system 100 starts in an off-grid manner and either of the second switch K2 and the third switch K3 is faulty, the other switch may ensure that the on-grid/off-grid switching apparatus 120 is disconnected from the power grid 400, to isolate the photovoltaic power generation system 100 from the power grid 400. Therefore, there is no safety compliance risk, and safety of the photovoltaic power generation system 100 may be ensured. For example, generally, when a power outage occurs in the power grid and maintenance by personnel is needed, the photovoltaic power generation system 100 starts in an off-grid manner. If either of the second switch K2 and the third switch K3 has a stuck-at fault, the other switch may ensure that the on-grid/off-grid switching apparatus 120 is disconnected from the power grid 400, to isolate the photovoltaic power generation system 100 from the power grid 400, thereby avoiding a case in which the on-grid/off-grid switching apparatus 120 transmits an alternating current to the power grid 400, and avoiding injury caused by the alternating current to the power grid maintenance personnel. Therefore, there is no safety compliance risk, and reliability of the photovoltaic power generation system 100 may be ensured.

However, the second switch K2 and the third switch K3 connected in series are disposed between the first output end and the second output end of the on-grid/off-grid switching apparatus 120, and the two switches are separately controlled through two drive circuits. As a result, the on-grid/off-grid switching apparatus 120 has a complex structure, high costs, and low reliability. In addition, fault detection is needed for the two switches in various operating conditions, and a solution of performing fault detection on the two switches is relatively complex and difficult to implement. Therefore, a problem to be urgently resolved is about how to disconnect the on-grid/off-grid switching apparatus 120 from the power grid 400 when the photovoltaic power generation system 100 starts in an off-grid manner upon a power outage of the power grid, to satisfy a safety compliance risk requirement and ensure safety of the photovoltaic power generation system 100 while the on-grid/off-grid switching apparatus 120 has a simple structure, low costs, and high reliability with a simple fault detection solution easy to implement.

On this basis, an embodiment of this application provides a photovoltaic power generation system. When a power outage occurs in a power grid and the photovoltaic power generation system starts in an off-grid manner, an on-grid/off-grid switching apparatus is disconnected from the power grid by using a switch, to isolate the photovoltaic power generation system from the power grid. Therefore, the on-grid/off-grid switching apparatus has a simple structure, low costs, and high reliability, and a solution of detecting whether the switch is stuck is simple. When the switch is stuck, a voltage of an alternating current output by the on-grid/off-grid switching apparatus to the power grid is less than or equal to a voltage safe for a human body without causing injury to power grid maintenance personnel, thereby satisfying a safety compliance risk requirement and ensuring safety of the photovoltaic power generation system.

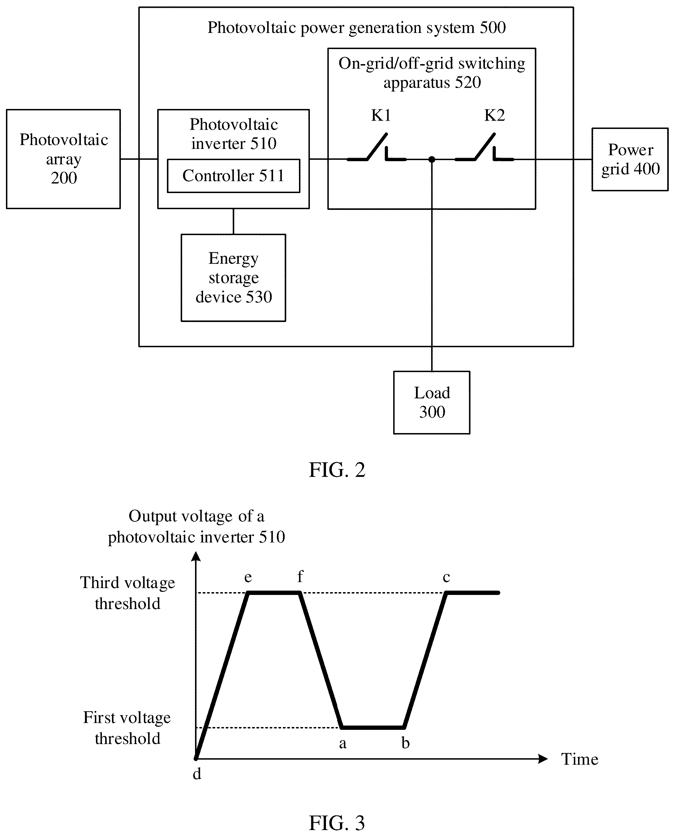

FIG. 2 is a schematic of a circuit topology of a photovoltaic power generation system 500 according to an embodiment of this application. The photovoltaic power generation system 500 includes a photovoltaic inverter 510 and an on-grid/off-grid switching apparatus 520. An input end of the photovoltaic inverter 510 is configured to connect to a photovoltaic array 200, and an output end of the photovoltaic inverter 510 is connected to an input end of the on-grid/off-grid switching apparatus 520. The photovoltaic inverter 510 includes a controller 511, and the on-grid/off-grid switching apparatus 520 includes a first switch K1 and a second switch K2. One end of the first switch K1 is connected to the input end of the on-grid/off-grid switching apparatus 520, and the other end of the first switch K1 is connected to one end of the second switch K2. The other end of the first switch K1 is further configured to connect to a load 300. The other end of the first switch K1 may be referred to as an off-grid port. The other end of the second switch K2 is configured to connect to a power grid 400. The other end of the second switch K2 may be referred to as an on-grid port.

The photovoltaic array 200 is configured to convert solar energy into a direct current, the photovoltaic inverter 510 is configured to convert the direct current into an alternating current, and the on-grid/off-grid switching apparatus 520 is configured to perform on-grid/off-grid switching. Refer to FIG. 2. When the photovoltaic power generation system 500 runs in an on-grid mode, both the first switch K1 and the second switch K2 in the on-grid/off-grid switching apparatus 520 are turned on, and the on-grid/off-grid switching apparatus 520 is configured to transmit an alternating current to the power grid 400, or receive an alternating current from the power grid 400.

When a power outage occurs in the power grid 400, the photovoltaic inverter 510 is in a shutdown state. For example, as shown in FIG. 2, the photovoltaic power generation system 500 may further include an energy storage device 530 connected to the photovoltaic inverter 510. Because there is no sunlight at night and the energy storage device 530 has low power to supply power to the load 300, consequently the photovoltaic inverter 510 is in the shutdown state and the photovoltaic power generation system 500 starts in an off-grid manner. This case is as follows.

The photovoltaic array 200 is configured to convert solar energy into a direct current in daytime. The photovoltaic inverter 510 is configured to receive the direct current and start a self-check. After the self-check is complete, the photovoltaic inverter 510 starts to operate, to convert the direct current into an alternating current and supply power to the load 300 by using the on-grid/off-grid switching apparatus 520. Specifically, when a power outage occurs in the power grid 400, generally because the power grid 400 is faulty, power grid maintenance personnel need to examine and repair the power grid 400. Therefore, when the photovoltaic inverter 510 supplies power to the load 300 by using the on-grid/off-grid switching apparatus 520, the controller 511 needs to control the first switch K1 to be turned on and control the second switch K2 to be turned off, to ensure that the on-grid/off-grid switching apparatus 520 is disconnected from the power grid 400, and ensure that an alternating current output by the photovoltaic inverter 510 is not transmitted through the second switch K2 to the power grid 400. This avoids a case in which the alternating current causes injury to the power grid maintenance personnel, and the photovoltaic inverter 510 is isolated from the power grid 400, thereby satisfying a safety compliance risk requirement and ensuring safety of the photovoltaic power generation system 500.

When the second switch K2 operates normally, the controller 511 may control the second switch K2 in the on-grid/off-grid switching apparatus 520 to be turned on or off. However, if the second switch K2 has a stuck-at fault, the second switch K2 is persistently in a closed state, and the controller 511 cannot control the second switch K2 to be turned off. Therefore, to ensure safety of the photovoltaic power generation system 500, when a power outage occurs in the power grid 400, the photovoltaic inverter 510 supplies power to the load 300 by using the on-grid/off-grid switching apparatus 520. Before the controller 511 controls the first switch K1 to be turned on and controls the second switch K2 to be turned off, the controller 511 needs to determine whether the second switch K2 has a stuck-at fault.

Specifically, the controller 511 is configured to: when a power outage occurs in the power grid and an output voltage of the photovoltaic inverter 510 is controlled so that the output voltage of the photovoltaic inverter 510 is less than or equal to a first voltage threshold as shown in a segment ab in FIG. 3, control the first switch K1 to be turned on, and control the second switch K2 to be turned off. The first voltage threshold is greater than zero and less than or equal to a human body safety voltage threshold. A specific value of the first voltage threshold is not limited in this embodiment of this application. When there is no source at both ends of the second switch K2, accuracy of fault detection on the second switch K2 is relatively low. When the output voltage of the photovoltaic inverter 510 is controlled to be less than or equal to the first voltage threshold, the controller 511 controls the first switch K1 to be turned on, and controls the second switch K2 to be turned off. An alternating current transmitted by the first switch K1 to the second switch K2 is used to perform stuck-at fault detection on the second switch K2. The controller 511 detects a voltage difference between the two ends of the second switch K2, and compares the voltage difference between the two ends of the second switch K2 with a voltage value of the output voltage of the photovoltaic inverter 510, to determine whether the second switch K2 has a stuck-at fault, thereby improving accuracy of fault detection on the second switch K2. For example, when detecting that the voltage difference between the two ends of the second switch K2 is close to or equal to the voltage value of the output voltage of the photovoltaic inverter 510, the controller 511 may determine that the second switch K2 has no stuck-at fault; or when detecting that the voltage difference between the two ends of the second switch K2 is close to or equal to zero, the controller 511 may determine that the second switch K2 has a stuck-at fault. In addition, because the output voltage of the photovoltaic inverter 510 is less than or equal to the first voltage threshold, when the second switch K2 has a stuck-at fault, a voltage of an alternating current output by the second switch K2 to the power grid 400 is also less than or equal to the human body safety voltage threshold without causing injury to power grid maintenance personnel, thereby satisfying a safety compliance risk requirement and ensuring safety of the photovoltaic power generation system 500.

The controller 511 is further configured to: after controlling the first switch K1 to be turned on, detect the voltage difference between the two ends of the second switch K2; and when the voltage difference between the two ends of the second switch K2 is greater than a second voltage threshold and less than or equal to the voltage value of the output voltage of the photovoltaic inverter 510 and it is determined that the second switch K2 has no stuck-at fault, control the output voltage of the photovoltaic inverter 510 so that the output voltage of the photovoltaic inverter 510 rises to being greater than or equal to a third voltage threshold as shown in a segment bc in FIG. 3, so that the photovoltaic inverter 510 supplies power to the load 300. The second voltage threshold is greater than zero and less than the first voltage threshold, and the third voltage threshold is greater than the human body safety voltage threshold. Specific values of the second voltage threshold and the third voltage threshold are not limited in this embodiment of this application. Therefore, when the photovoltaic power generation system 100 starts, the on-grid/off-grid switching apparatus 120 is disconnected from the power grid 400 by using the two switches connected in series, to isolate the photovoltaic power generation system 100 from the power grid 400, where the two switches are separately controlled through two drive circuits. In comparison, when the photovoltaic power generation system 500 starts in an off-grid manner, the on-grid/off-grid switching apparatus 520 may be disconnected from the power grid 400 by using one switch, namely, the second switch K2, to isolate the photovoltaic power generation system 500 from the power grid 400. The second switch K2 does not need to be controlled through two drive circuits. The on-grid/off-grid switching apparatus 520 has a simple structure, low costs, and high reliability. In addition, when the voltage difference between the two ends of the second switch K2 is greater than the second voltage threshold and less than or equal to the voltage value of the output voltage of the photovoltaic inverter 510 and it is determined that the second switch K2 has no stuck-at fault, the controller 511 controls the photovoltaic inverter 510 to supply power to the load 300. A solution of detecting whether the second switch K2 is stuck is simpler, and it may be ensured that the photovoltaic inverter 510 does not transmit a relatively high voltage through the second switch K2 to the power grid 400, thereby ensuring safety of the photovoltaic power generation system 500.

In a possible embodiment, the controller 511 is further configured to: after controlling the first switch K1 to be turned on, detect the voltage difference between the two ends of the second switch K2; and when the voltage difference between the two ends of the second switch K2 is greater than or equal to zero and less than or equal to a fourth voltage threshold and it is determined that the second switch K2 has a stuck-at fault, control the first switch K1 to be turned off, and control the photovoltaic inverter 510 to shut down. The fourth voltage threshold is greater than zero and less than or equal to the second voltage threshold, and a specific value of the fourth voltage threshold is not limited in this embodiment of this application. When the voltage difference between the two ends of the second switch K2 is greater than or equal to zero and less than or equal to the fourth voltage threshold and it is determined that the second switch K2 has a stuck-at fault, the controller 511 controls the first switch K1 to be turned off, and controls the photovoltaic inverter 510 to shut down. A solution of detecting whether the second switch K2 is stuck is simpler, and it may be ensured that the photovoltaic inverter 510 does not transmit a relatively high voltage through the second switch K2 to the power grid 400, thereby ensuring safety of the photovoltaic power generation system 500.

In a possible embodiment, a type of the first switch K1 or the second switch K2 includes a relay or a contactor. This is not limited in this embodiment of this application.

In a possible embodiment, the controller 511 includes a digital signal processor (digital signal process, DSP) chip or a microcontroller unit (microcontroller unit, MCU). The microcontroller unit may also be referred to as a single-chip microcomputer. This is not limited in this embodiment of this application.

In a possible embodiment, the controller 511 may be disposed outside the photovoltaic inverter 510, and the controller 511 may be an independent device in the photovoltaic power generation system 500.

According to the photovoltaic power generation system 500 provided in this embodiment of this application, when a power outage occurs in the power grid 400 and the output voltage of the photovoltaic inverter 510 is controlled to be less than or equal to the first voltage threshold, the controller 511 controls the first switch K1 to be turned on and controls the second switch K2 to be turned off. An alternating current transmitted by the first switch K1 to the second switch K2 is used to perform stuck-at fault detection on the second switch K2, thereby improving accuracy of fault detection on the second switch K2. In addition, because the output voltage of the photovoltaic inverter 510 is less than or equal to the first voltage threshold and the first voltage threshold is greater than zero and less than or equal to the human body safety voltage threshold, when the second switch K2 has a stuck-at fault, a voltage of an alternating current output by the second switch K2 to the power grid 400 is also less than or equal to the human body safety voltage threshold without causing injury to power grid maintenance personnel, thereby satisfying a safety compliance risk requirement and ensuring safety of the photovoltaic power generation system 500. In addition, when the photovoltaic power generation system 100 starts, the on-grid/off-grid switching apparatus 120 is disconnected from the power grid 400 by using the two switches connected in series, to isolate the photovoltaic power generation system 100 from the power grid 400, where the two switches are separately controlled through two drive circuits. In comparison, when the photovoltaic power generation system 500 starts in an off-grid manner, the on-grid/off-grid switching apparatus 520 may be disconnected from the power grid 400 by using one switch, namely, the second switch K2, to isolate the photovoltaic power generation system 500 from the power grid 400. The second switch K2 does not need to be controlled through two drive circuits. The on-grid/off-grid switching apparatus 520 has a simple structure, low costs, and high reliability. Finally, when the voltage difference between the two ends of the second switch K2 is greater than the second voltage threshold and less than or equal to the voltage value of the output voltage of the photovoltaic inverter 510 and it is determined that the second switch K2 has no stuck-at fault, the controller 511 controls the output voltage of the photovoltaic inverter 510 to rise to being greater than or equal to the third voltage threshold, so that the photovoltaic inverter 510 supplies power to the load 300. A solution of detecting whether the second switch K2 is stuck is simpler, and it may be ensured that the photovoltaic inverter 510 does not transmit a relatively high voltage through the second switch K2 to the power grid 400, thereby ensuring safety of the photovoltaic power generation system 500.

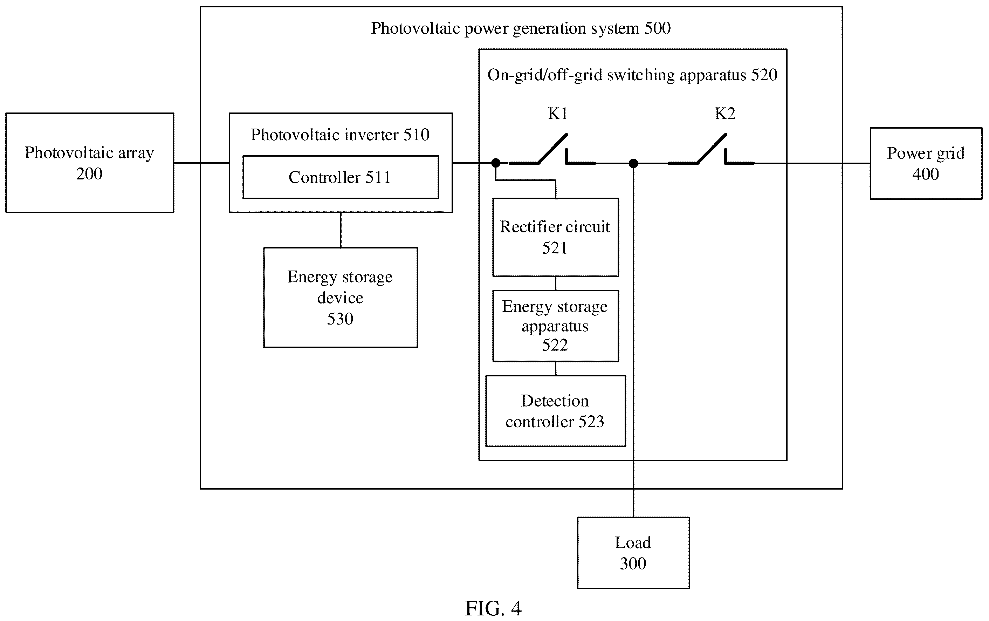

In a possible embodiment, as shown in FIG. 4, in the photovoltaic power generation system 500 provided in this embodiment of this application, the on-grid/off-grid switching apparatus 520 further includes a rectifier circuit 521 and an energy storage apparatus 522. An input end of the rectifier circuit 521 is connected to the input end of the on-grid/off-grid switching apparatus 520, an output end of the rectifier circuit 521 is connected to an input end of the energy storage apparatus 522, and the energy storage apparatus 522 is configured to supply power to the on-grid/off-grid switching apparatus 520. For example, as shown in FIG. 4, the on-grid/off-grid switching apparatus 520 may further include a detection controller 523 connected to the energy storage apparatus 522. The energy storage apparatus 522 may be configured to supply power to the detection controller 523. The detection controller 523 is configured to communicate with the controller 511. The detection controller 523 is further configured to control the first switch K1 and the second switch K2 in the on-grid/off-grid switching apparatus 520, and detect the voltage difference between the two ends of the second switch K2.

In a possible embodiment, the energy storage apparatus 522 includes a capacitor or a lithium battery. This is not limited in this embodiment of this application.

The controller 511 is further configured to: before controlling the output voltage of the photovoltaic inverter 510 so that the output voltage of the photovoltaic inverter 510 is less than or equal to the first voltage threshold as shown in the segment ab in FIG. 3, control the output voltage of the photovoltaic inverter 510 so that the output voltage of the photovoltaic inverter 510 rises from zero to being greater than or equal to the third voltage threshold as shown in a segment de in FIG. 3, to charge the energy storage apparatus 522. The controller 511 is further configured to: after controlling the photovoltaic inverter 510 to charge the energy storage apparatus 522, when a voltage of the energy storage apparatus 522 is greater than or equal to a fifth voltage threshold, voltage fluctuation of the energy storage apparatus 522 is less than or equal to a voltage fluctuation threshold, and charging of the energy storage apparatus 522 is complete, control the output voltage of the photovoltaic inverter 510, so that the output voltage of the photovoltaic inverter 510 decreases to being less than or equal to the first voltage threshold as shown in a segment fa in FIG. 3. Specific values of the fifth voltage threshold and the voltage fluctuation threshold are not limited in this embodiment of this application.

In a possible embodiment, the energy storage apparatus 522 is configured to supply power to the on-grid/off-grid switching apparatus 520 from a first moment to a second moment. The first moment is a moment at which the voltage of the energy storage apparatus 522 is greater than or equal to the fifth voltage threshold, the voltage fluctuation of the energy storage apparatus 522 is less than or equal to the voltage fluctuation threshold, and charging of the energy storage apparatus 522 is complete, for example, a moment f in FIG. 3. The second moment is a moment at which the output voltage of the photovoltaic inverter 510 rises from being less than or equal to the first voltage threshold to being greater than or equal to the third voltage threshold, for example, a moment c in FIG. 3. It may be understood that the energy storage apparatus 522 is configured to supply power to the on-grid/off-grid switching apparatus 520 in a time period between the moment f and the moment c, to avoid a case in which the on-grid/off-grid switching apparatus 520 cannot operate normally when the output voltage of the photovoltaic inverter 510 is less than the third voltage threshold, thereby improving reliability of the on-grid/off-grid switching apparatus 520 and reliability of the photovoltaic power generation system 500.

In a possible embodiment, the controller 511 may be disposed in the on-grid/off-grid switching apparatus 520 and integrated with the detection controller 523.

In a possible embodiment, the on-grid/off-grid switching apparatus 520 may be disposed in the photovoltaic inverter 510, and the on-grid/off-grid switching apparatus 520 and the photovoltaic inverter 510 may be sold as a photovoltaic inverter.

According to the photovoltaic power generation system 500 provided in this embodiment of this application, the on-grid/off-grid switching apparatus 520 further includes the energy storage apparatus 522. The controller 511 first controls the photovoltaic inverter 510 to charge the energy storage apparatus 522; and when the voltage of the energy storage apparatus 522 is greater than or equal to the fifth voltage threshold, the voltage fluctuation of the energy storage apparatus 522 is less than or equal to the voltage fluctuation threshold, and charging of the energy storage apparatus 522 is complete, controls the output voltage of the photovoltaic inverter 510 to decrease to being less than or equal to the first voltage threshold. The energy storage apparatus 522 is configured to supply power to the on-grid/off-grid switching apparatus 520, to avoid a case in which the on-grid/off-grid switching apparatus 520 cannot operate normally when the output voltage of the photovoltaic inverter 510 is less than the third voltage threshold, thereby improving reliability of the on-grid/off-grid switching apparatus 520 and reliability of the photovoltaic power generation system 500.

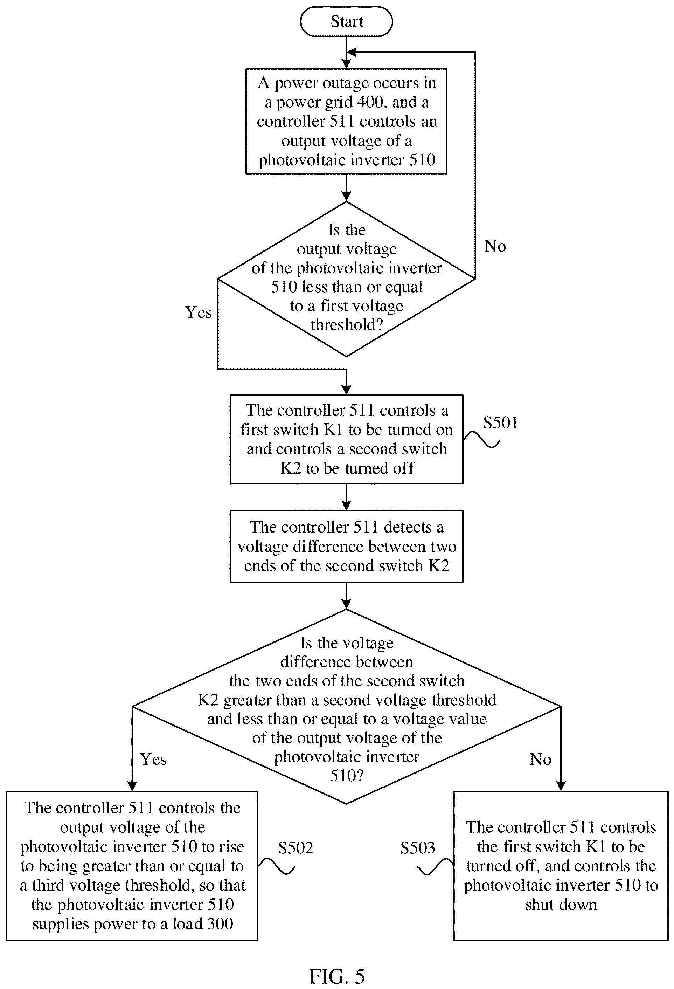

As shown in FIG. 5, an embodiment of this application further provides a photovoltaic power generation system control method, which is applicable to the photovoltaic power generation system 500. The method includes step S501 and step S502.

S501: When a power outage occurs in a power grid 400 and an output voltage of a photovoltaic inverter 510 is controlled to be less than or equal to a first voltage threshold, a controller 511 controls a first switch K1 to be turned on and controls a second switch K2 to be turned off, where the first voltage threshold is greater than zero and less than or equal to a human body safety voltage threshold.

In a possible embodiment, when the controller 511 controls the output voltage of the photovoltaic inverter 510 to be greater than the first voltage threshold, the controller 511 continues to control the output voltage of the photovoltaic inverter 510, so that the output voltage of the photovoltaic inverter 510 is less than or equal to the first voltage threshold.

S502: After controlling the first switch K1 to be turned on, the controller 511 detects a voltage difference between two ends of the second switch K2; and when the voltage difference between the two ends of the second switch K2 is greater than a second voltage threshold and less than or equal to a voltage value of the output voltage of the photovoltaic inverter 510, controls the output voltage of the photovoltaic inverter 510 to rise to being greater than or equal to a third voltage threshold, so that the photovoltaic inverter 510 supplies power to a load 300.

The second voltage threshold is greater than zero and less than the first voltage threshold, and the third voltage threshold is greater than the human body safety voltage threshold. Specific values of the second voltage threshold and the third voltage threshold are not limited in this embodiment of this application.

According to the photovoltaic power generation system control method provided in this embodiment of this application, when a power outage occurs in the power grid 400 and the output voltage of the photovoltaic inverter 510 is controlled to be less than or equal to the first voltage threshold, the controller 511 controls the first switch K1 to be turned on, and controls the second switch K2 to be turned off. An alternating current transmitted by the first switch K1 to the second switch K2 is used to perform stuck-at fault detection on the second switch K2, thereby improving accuracy of fault detection on the second switch K2 In addition, because the output voltage of the photovoltaic inverter 510 is less than or equal to the first voltage threshold and the first voltage threshold is greater than zero and less than or equal to the human body safety voltage threshold, when the second switch K2 has a stuck-at fault, a voltage of an alternating current output by the second switch K2 to the power grid 400 is also less than or equal to the human body safety voltage threshold without causing injury to power grid maintenance personnel, thereby satisfying a safety compliance risk requirement and ensuring safety of the photovoltaic power generation system 500. In addition, when the photovoltaic power generation system 100 starts, the on-grid/off-grid switching apparatus 120 is disconnected from the power grid 400 by using the two switches connected in series, to isolate the photovoltaic power generation system 100 from the power grid 400, where the two switches are separately controlled through two drive circuits. In comparison, when the photovoltaic power generation system 500 starts in an off-grid manner, an on-grid/off-grid switching apparatus 520 may be disconnected from the power grid 400 by using one switch, namely, the second switch K2, to isolate the photovoltaic power generation system 500 from the power grid 400. The second switch K2 does not need to be controlled through two drive circuits. The on-grid/off-grid switching apparatus 520 has a simple structure, low costs, and high reliability. Finally, when the voltage difference between the two ends of the second switch K2 is greater than the second voltage threshold and less than or equal to the voltage value of the output voltage of the photovoltaic inverter 510 and it is determined that the second switch K2 has no stuck-at fault, the controller 511 controls the output voltage of the photovoltaic inverter 510 to rise to being greater than or equal to the third voltage threshold, so that the photovoltaic inverter 510 supplies power to the load 300. A solution of detecting whether the second switch K2 is stuck is simpler, and it may be ensured that the photovoltaic inverter 510 does not transmit a relatively high voltage through the second switch K2 to the power grid 400, thereby ensuring safety of the photovoltaic power generation system 500.

In a possible embodiment, as shown in FIG. 5, the photovoltaic power generation system control method provided in this embodiment of this application further includes step S503. When step S503 and step S502 are performed, either of the two steps may be performed based on a relationship between the voltage difference between the two ends of the second switch K2 and a voltage threshold.

S503: After controlling the first switch K1 to be turned on, the controller 511 detects the voltage difference between the two ends of the second switch K2; and when the voltage difference between the two ends of the second switch K2 is greater than or equal to zero and less than or equal to a fourth voltage threshold, controls the first switch K1 to be turned off, and controls the photovoltaic inverter 510 to shut down. The fourth voltage threshold is greater than zero and less than or equal to the second voltage threshold. In this embodiment of this application, an example in which the fourth voltage threshold is equal to the second voltage threshold is used for description.

According to the photovoltaic power generation system control method provided in this embodiment of this application, when the voltage difference between the two ends of the second switch K2 is greater than or equal to zero and less than or equal to the fourth voltage threshold and it is determined that the second switch K2 has a stuck-at fault, the controller 511 controls the first switch K1 to be turned off, and controls the photovoltaic inverter 510 to shut down. A solution of detecting whether the second switch K2 is stuck is simpler, and it may be ensured that the photovoltaic inverter 510 does not transmit a relatively high voltage through the second switch K2 to the power grid 400, thereby ensuring safety of the photovoltaic power generation system 500.

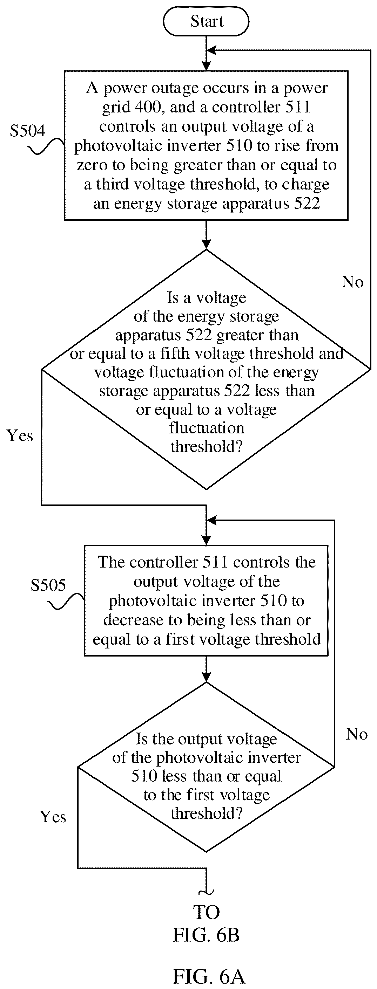

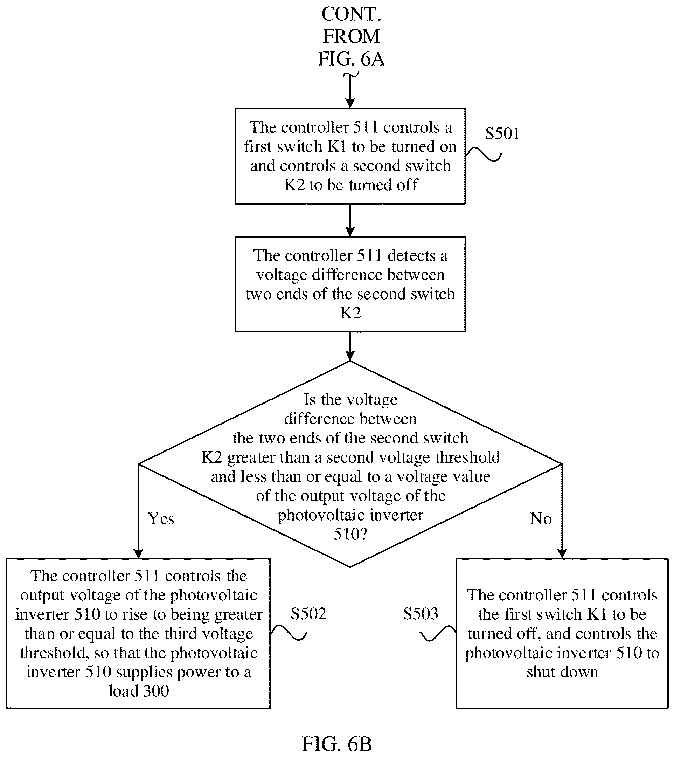

In a possible embodiment, as shown in FIG. 4, in the photovoltaic power generation system 500 provided in this embodiment of this application, the on-grid/off-grid switching apparatus 520 further includes a rectifier circuit 521 and an energy storage apparatus 522. An input end of the rectifier circuit 521 is connected to an input end of the on-grid/off-grid switching apparatus 520, an output end of the rectifier circuit 521 is connected to an input end of the energy storage apparatus 522, and the energy storage apparatus 522 is configured to supply power to the on-grid/off-grid switching apparatus 520. As shown in FIG. 6A and FIG. 6B, before step S501, the photovoltaic power generation system control method provided in this embodiment of this application further includes step S504 and step S505.

S504: Before controlling the output voltage of the photovoltaic inverter 510 to be less than or equal to the first voltage threshold, the controller 511 controls the output voltage of the photovoltaic inverter 510 to rise from zero to being greater than or equal to the third voltage threshold, to charge the energy storage apparatus 522.

S505: After controlling the photovoltaic inverter 510 to charge the energy storage apparatus 522, when a voltage of the energy storage apparatus 522 is greater than or equal to a fifth voltage threshold and voltage fluctuation of the energy storage apparatus 522 is less than or equal to a voltage fluctuation threshold, the controller 511 controls the output voltage of the photovoltaic inverter 510 to decrease to being less than or equal to the first voltage threshold. Specific values of the fifth voltage threshold and the voltage fluctuation threshold are not limited in this embodiment of this application.

In a possible embodiment, the energy storage apparatus 522 is configured to supply power to the on-grid/off-grid switching apparatus 520 from a first moment to a second moment. The first moment is a moment at which the voltage of the energy storage apparatus 522 is greater than or equal to the fifth voltage threshold, the voltage fluctuation of the energy storage apparatus 522 is less than or equal to the voltage fluctuation threshold, and charging of the energy storage apparatus 522 is complete, for example, a moment f in FIG. 3. The second moment is a moment at which the output voltage of the photovoltaic inverter 510 rises from being less than or equal to the first voltage threshold to being greater than or equal to the third voltage threshold, for example, a moment c in FIG. 3. It may be understood that the energy storage apparatus 522 is configured to supply power to the on-grid/off-grid switching apparatus 520 in a time period between the moment f and the moment c, to avoid a case in which the on-grid/off-grid switching apparatus 520 cannot operate normally when the output voltage of the photovoltaic inverter 510 is less than the third voltage threshold, thereby improving reliability of the on-grid/off-grid switching apparatus 520 and reliability of the photovoltaic power generation system 500.

According to the photovoltaic power generation system control method provided in this embodiment of this application, the on-grid/off-grid switching apparatus 520 further includes the energy storage apparatus 522. The controller 511 first controls the photovoltaic inverter 510 to charge the energy storage apparatus 522; and when the voltage of the energy storage apparatus 522 is greater than or equal to the fifth voltage threshold, the voltage fluctuation of the energy storage apparatus 522 is less than or equal to the voltage fluctuation threshold, and charging of the energy storage apparatus 522 is complete, controls the output voltage of the photovoltaic inverter 510 to decrease to being less than or equal to the first voltage threshold. The energy storage apparatus 522 is configured to supply power to the on-grid/off-grid switching apparatus 520, to avoid a case in which the on-grid/off-grid switching apparatus 520 cannot operate normally when the output voltage of the photovoltaic inverter 510 is less than the third voltage threshold, thereby improving reliability of the on-grid/off-grid switching apparatus 520 and reliability of the photovoltaic power generation system 500.

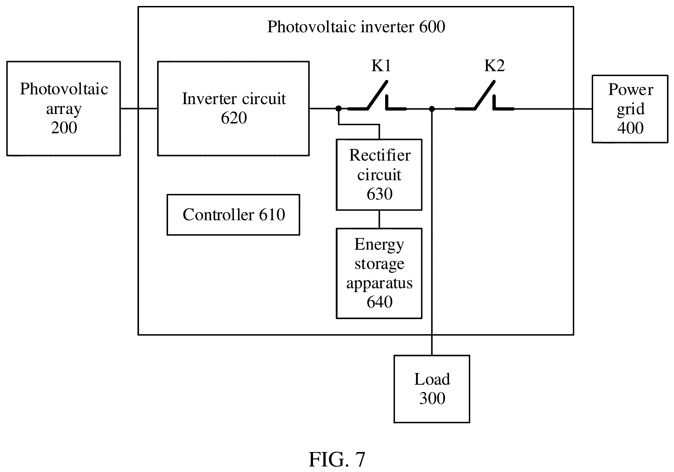

On this basis, as shown in FIG. 7, an embodiment of this application further provides a photovoltaic inverter 600. The photovoltaic inverter 600 includes a controller 610, an inverter circuit 620, a first switch K1, and a second switch K2. An input end of the inverter circuit 620 is configured to connect to a photovoltaic array 200, and an output end of the inverter circuit 620 is connected to one end of the first switch K1. The other end of the first switch K1 is connected to one end of the second switch K2. The other end of the first switch K1 is further configured to connect to a load 300. The other end of the second switch K2 is configured to connect to a power grid 400. The controller 610 is configured to: when a power outage occurs in the power grid 400 and an output voltage of the inverter circuit 620 is controlled to be less than or equal to a first voltage threshold, control the first switch K1 to be turned on and control the second switch K2 to be turned off, where the first voltage threshold is greater than zero and less than or equal to a human body safety voltage threshold. The controller 610 is further configured to: after controlling the first switch K1 to be turned on, detect a voltage difference between the two ends of the second switch K2; and when the voltage difference between the two ends of the second switch K2 is greater than a second voltage threshold and less than or equal to a voltage value of the output voltage of the inverter circuit 620, control the output voltage of the inverter circuit 620 to rise to a value greater than or being equal to a third voltage threshold, so that the photovoltaic inverter 600 supplies power to the load. The second voltage threshold is greater than zero and less than the first voltage threshold, and the third voltage threshold is greater than the human body safety voltage threshold.

In a possible embodiment, as shown in FIG. 7, the controller 610 is further configured to: after controlling the first switch K1 to be turned on, detect the voltage difference between the two ends of the second switch K2; and when the voltage difference between the two ends of the second switch K2 is greater than or equal to zero and less than or equal to a fourth voltage threshold, control the first switch K1 to be turned off, and control the photovoltaic inverter 600 to shut down. The fourth voltage threshold is greater than zero and less than or equal to the second voltage threshold.

In a possible embodiment, as shown in FIG. 7, the photovoltaic inverter 600 further includes a rectifier circuit 630 and an energy storage apparatus 640. An input end of the rectifier circuit 630 is connected to the output end of the inverter circuit 620, an output end of the rectifier circuit 630 is connected to an input end of the energy storage apparatus 640, and the energy storage apparatus 640 is configured to supply power to the photovoltaic inverter 600. The controller 610 is further configured to: before controlling the output voltage of the inverter circuit 620 to be less than or equal to the first voltage threshold, control the output voltage of the inverter circuit 620 to rise from zero to being greater than or equal to the third voltage threshold, to charge the energy storage apparatus 640. The controller 610 is further configured to: after controlling the inverter circuit 620 to charge the energy storage apparatus 640, when a voltage of the energy storage apparatus 640 is greater than or equal to a fifth voltage threshold and voltage fluctuation of the energy storage apparatus 640 is less than or equal to a voltage fluctuation threshold, control the output voltage of the inverter circuit 620 to decrease to being less than or equal to the first voltage threshold.

In a possible embodiment, the energy storage apparatus 640 is configured to supply power to the photovoltaic inverter 600 from a first moment to a second moment. The first moment is a moment at which the voltage of the energy storage apparatus 640 is greater than or equal to the fifth voltage threshold and the voltage fluctuation of the energy storage apparatus 640 is less than or equal to the voltage fluctuation threshold. The second moment is a moment at which the output voltage of the inverter circuit 620 rises from being less than or equal to the first voltage threshold to being greater than or equal to the third voltage threshold.

In a possible embodiment, the energy storage apparatus 640 includes a capacitor or a lithium battery.

It may be understood that, in the photovoltaic inverter 600, the controller 610 is equivalent to the controller 511 in the photovoltaic power generation system 500, the inverter circuit 620 is equivalent to the photovoltaic inverter 510 in the photovoltaic power generation system 500, and a circuit including the first switch K1, the second switch K2, the rectifier circuit 630, and the energy storage apparatus 640 is equivalent to the on-grid/off-grid switching apparatus 520 in the photovoltaic power generation system 500. The foregoing detailed descriptions and beneficial effect analysis of the photovoltaic power generation system 500 may be correspondingly referenced to the photovoltaic power generation system control method and the photovoltaic inverter 600. Details are not described herein in this embodiment of this application.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A photovoltaic power generation system, wherein the photovoltaic power generation system comprises a photovoltaic inverter and an on-grid/off-grid switching apparatus, an input end of the photovoltaic inverter is configured to connect to a photovoltaic array, and an output end of the photovoltaic inverter is connected to an input end of the on-grid/off-grid switching apparatus;
the photovoltaic inverter comprises a controller, the on-grid/off-grid switching apparatus comprises a first switch and a second switch, one end of the first switch is connected to the input end of the on-grid/off-grid switching apparatus, the other end of the first switch is connected to one end of the second switch, the other end of the first switch is further configured to connect to a load, and the other end of the second switch is configured to connect to a power grid;
the controller is configured to: when a power outage occurs in the power grid and an output voltage of the photovoltaic inverter is controlled to be less than or equal to a first voltage threshold, control the first switch to be turned on and control the second switch to be turned off, wherein the first voltage threshold is greater than zero and less than or equal to a human body safety voltage threshold; and
the controller is further configured to: after controlling the first switch to be turned on, detect a voltage difference between the two ends of the second switch; and when the voltage difference between the two ends of the second switch is greater than a second voltage threshold and less than or equal to a voltage value of the output voltage of the photovoltaic inverter, control the output voltage of the photovoltaic inverter to rise to being greater than or equal to a third voltage threshold, so that the photovoltaic inverter supplies power to the load, wherein the second voltage threshold is greater than zero and less than the first voltage threshold, and the third voltage threshold is greater than the human body safety voltage threshold.

2. The photovoltaic power generation system according to claim 1, wherein
the controller is further configured to: after controlling the first switch to be turned on, detect the voltage difference between the two ends of the second switch; and when the voltage difference between the two ends of the second switch is greater than or equal to zero and less than or equal to a fourth voltage threshold, control the first switch to be turned off, and control the photovoltaic inverter to shut down, wherein the fourth voltage threshold is greater than zero and less than or equal to the second voltage threshold.

3. The photovoltaic power generation system according to claim 1 or 2, wherein the on-grid/off-grid switching apparatus further comprises a rectifier circuit and an energy storage apparatus, an input end of the rectifier circuit is connected to the input end of the on-grid/off-grid switching apparatus, an output end of the rectifier circuit is connected to an input end of the energy storage apparatus, and the energy storage apparatus is configured to supply power to the on-grid/off-grid switching apparatus;
the controller is further configured to: before controlling the output voltage of the photovoltaic inverter to be less than or equal to the first voltage threshold, control the output voltage of the photovoltaic inverter to rise from zero to being greater than or equal to the third voltage threshold, to charge the energy storage apparatus; and
the controller is further configured to: after controlling the photovoltaic inverter to charge the energy storage apparatus, when a voltage of the energy storage apparatus is greater than or equal to a fifth voltage threshold and voltage fluctuation of the energy storage apparatus is less than or equal to a voltage fluctuation threshold, control the output voltage of the photovoltaic inverter to decrease to being less than or equal to the first voltage threshold.

4. The photovoltaic power generation system according to claim 3, wherein
the energy storage apparatus is configured to supply power to the on-grid/off-grid switching apparatus from a first moment to a second moment, wherein the first moment is a moment at which the voltage of the energy storage apparatus is greater than or equal to the fifth voltage threshold and the voltage fluctuation of the energy storage apparatus is less than or equal to the voltage fluctuation threshold, and the second moment is a moment at which the output voltage of the photovoltaic inverter rises from being less than or equal to the first voltage threshold to being greater than or equal to the third voltage threshold.

5. The photovoltaic power generation system according to claim 3 or 4, wherein the energy storage apparatus comprises a capacitor or a lithium battery.

6. A photovoltaic power generation system control method, applicable to a photovoltaic power generation system, wherein the method comprises:
when a power outage occurs in a power grid and an output voltage of a photovoltaic inverter is controlled to be less than or equal to a first voltage threshold, controlling, by a controller, a first switch to be turned on and controlling a second switch to be turned off, wherein the first voltage threshold is greater than zero and less than or equal to a human body safety voltage threshold; and
after controlling the first switch to be turned on, detecting, by the controller, a voltage difference between two ends of the second switch; and when the voltage difference between the two ends of the second switch is greater than a second voltage threshold and less than or equal to a voltage value of the output voltage of the photovoltaic inverter, controlling the output voltage of the photovoltaic inverter to rise to being greater than or equal to a third voltage threshold, so that the photovoltaic inverter supplies power to a load, wherein the second voltage threshold is greater than zero and less than the first voltage threshold, and the third voltage threshold is greater than the human body safety voltage threshold;
the photovoltaic power generation system comprises the photovoltaic inverter and an on-grid/off-grid switching apparatus, an input end of the photovoltaic inverter is configured to connect to a photovoltaic array, and an output end of the photovoltaic inverter is connected to an input end of the on-grid/off-grid switching apparatus; and
the photovoltaic inverter comprises the controller, the on-grid/off-grid switching apparatus comprises the first switch and the second switch, one end of the first switch is connected to the input end of the on-grid/off-grid switching apparatus, the other end of the first switch is connected to one end of the second switch, the other end of the first switch is further configured to connect to the load, and the other end of the second switch is configured to connect to the power grid.

7. The method according to claim 6, further comprising:
after controlling the first switch to be turned on, detecting, by the controller, the voltage difference between the two ends of the second switch; and when the voltage difference between the two ends of the second switch is greater than or equal to zero and less than or equal to a fourth voltage threshold, controlling the first switch to be turned off, and controlling the photovoltaic inverter to shut down, wherein the fourth voltage threshold is greater than zero and less than or equal to the second voltage threshold.

8. The method according to claim 6 or 7, further comprising:
before controlling the output voltage of the photovoltaic inverter to be less than or equal to the first voltage threshold, controlling, by the controller, the output voltage of the photovoltaic inverter to rise from zero to being greater than or equal to the third voltage threshold, to charge an energy storage apparatus; and
after controlling the photovoltaic inverter to charge the energy storage apparatus, when a voltage of the energy storage apparatus is greater than or equal to a fifth voltage threshold and voltage fluctuation of the energy storage apparatus is less than or equal to a voltage fluctuation threshold, controlling, by the controller, the output voltage of the photovoltaic inverter to decrease to being less than or equal to the first voltage threshold; and
the on-grid/off-grid switching apparatus further comprises a rectifier circuit and the energy storage apparatus, wherein an input end of the rectifier circuit is connected to the input end of the on-grid/off-grid switching apparatus, an output end of the rectifier circuit is connected to an input end of the energy storage apparatus, and the energy storage apparatus is configured to supply power to the on-grid/off-grid switching apparatus.

9. The method according to claim 8, wherein the energy storage apparatus is configured to supply power to the on-grid/off-grid switching apparatus from a first moment to a second moment, the first moment is a moment at which a voltage of the energy storage apparatus is greater than or equal to the fifth voltage threshold and the voltage fluctuation of the energy storage apparatus is less than or equal to the voltage fluctuation threshold, and the second moment is a moment at which the output voltage of the photovoltaic inverter rises from being less than or equal to the first voltage threshold to being greater than or equal to the third voltage threshold.

10. The method according to claim 8 or 9, wherein the energy storage apparatus comprises a capacitor or a lithium battery.

11. A photovoltaic inverter, wherein the photovoltaic inverter comprises a controller, an inverter circuit, a first switch, and a second switch, an input end of the inverter circuit is configured to connect to a photovoltaic array, an output end of the inverter circuit is connected to one end of the first switch, the other end of the first switch is connected to one end of the second switch, the other end of the first switch is further configured to connect to a load, and the other end of the second switch is configured to connect to a power grid;
the controller is configured to: when a power outage occurs in the power grid and an output voltage of the inverter circuit is controlled to be less than or equal to a first voltage threshold, control the first switch to be turned on and control the second switch to be turned off, wherein the first voltage threshold is greater than zero and less than or equal to a human body safety voltage threshold; and
the controller is further configured to: after controlling the first switch to be turned on, detect a voltage difference between the two ends of the second switch; and when the voltage difference between the two ends of the second switch is greater than a second voltage threshold and less than or equal to a voltage value of the output voltage of the inverter circuit, control the output voltage of the inverter circuit to rise to a value greater than or being equal to a third voltage threshold, so that the photovoltaic inverter supplies power to the load, wherein the second voltage threshold is greater than zero and less than the first voltage threshold, and the third voltage threshold is greater than the human body safety voltage threshold.

12. The photovoltaic inverter according to claim 11, wherein
the controller is further configured to: after controlling the first switch to be turned on, detect the voltage difference between the two ends of the second switch; and when the voltage difference between the two ends of the second switch is greater than or equal to zero and less than or equal to a fourth voltage threshold, control the first switch to be turned off, and control the photovoltaic inverter to shut down, wherein the fourth voltage threshold is greater than zero and less than or equal to the second voltage threshold.

13. The photovoltaic inverter according to claim 11 or 12, wherein the photovoltaic inverter further comprises a rectifier circuit and an energy storage apparatus, an input end of the rectifier circuit is connected to the output end of the inverter circuit, an output end of the rectifier circuit is connected to an input end of the energy storage apparatus, and the energy storage apparatus is configured to supply power to the photovoltaic inverter;
the controller is further configured to: before controlling the output voltage of the inverter circuit to be less than or equal to the first voltage threshold, control the output voltage of the inverter circuit to rise from zero to being greater than or equal to the third voltage threshold, to charge the energy storage apparatus; and
the controller is further configured to: after controlling the inverter circuit to charge the energy storage apparatus, when a voltage of the energy storage apparatus is greater than or equal to a fifth voltage threshold and voltage fluctuation of the energy storage apparatus is less than or equal to a voltage fluctuation threshold, control the output voltage of the inverter circuit to decrease to being less than or equal to the first voltage threshold.

14. The photovoltaic inverter according to claim 13, wherein
the energy storage apparatus is configured to supply power to the photovoltaic inverter from a first moment to a second moment, wherein the first moment is a moment at which the voltage of the energy storage apparatus is greater than or equal to the fifth voltage threshold and the voltage fluctuation of the energy storage apparatus is less than or equal to the voltage fluctuation threshold, and the second moment is a moment at which the output voltage of the inverter circuit rises from being less than or equal to the first voltage threshold to being greater than or equal to the third voltage threshold.

15. The photovoltaic inverter according to claim 13 or 14, wherein the energy storage apparatus comprises a capacitor or a lithium battery.
